# EUROPEAN PATENT APPLICATION

(11) **EP 2 249 063 A1**
(43) Date of publication of application: **10.11.2010**
(21) Application number: 10161506.0
(22) Date of filing: 29.04.2010
(51) Int. Cl.: F16H 47/04, B60K 17/344, B60K 17/356, F16H 3/72, F16H 37/08

(54) **Transmission for a vehicle**

(30) Priority: 06.05.2009 US 436519
(71) Applicant: DEERE & COMPANY, Moline, Illinois 61265-8098 (US)
(72) Inventor: Burjes, Roger W, Independence, KS 67301 (US); Bloomfield, John J, Wamego, KS 66547 (US)
(74) Representative: Dehnhardt, Florian Christopher

(57) **Abstract**

A transmission (12) for a vehicle comprises a first variable speed drive (30) having a first output shaft (42), and a second variable speed drive (32) having a second output shaft (48). A planetary gear set (34) includes a sun gear (50) coupled with said first output shaft (42). A ring gear (52) is coupled with said second output shaft (48). A plurality of planetary gears (54) is enmeshed between said sun gear (50) and said ring gear (52). A carrier gear (56) is coupled with each of said plurality of planetary gears (54). A final output (36) includes a third output shaft (58) carrying an output gear (60), said output gear (60) is enmeshed with said carrier gear (56).

## Description

The present invention relates to a transmission for a vehicle, in particular an agricultural tractor.

Agricultural tractors as well as many other work machines typically include a prime mover in the form of an internal combustion (IC) engine. The internal combustion engine may either be in the form of a compression ignition type (i.e., diesel engine) or a spark ignition type (i.e., gasoline engine). For most heavy work machines, the prime mover is in the form of a diesel engine having better lugging, pull-down and torque characteristics for associated work operations.

An internal combustion engine in a work machine provides input power to a transmission, which in turn is coupled with and drives rear axles through a rear end differential. The transmission, rear end differential and rear axles are sometimes referred to as the rear end drive train of such work machine. The transmission typically is attached to the front of and provides input power to the rear end differential. The rear end differential provides ground power to the two rear axles. In the case of an agricultural tractor, the rear end differential also usually includes at least one power take-off (PTO) shaft extending rearwardly within a three point hitch arrangement at the rear of the agricultural tractor.

With a work machine as described above, it is common to provide a transmission with multiple shift ranges. Typically one shift lever is used to shift between multiple gear ranges (e.g., A, B, C and D gear ranges), and a second shift lever is used to shift between discrete gear pairs within each range (e.g., 1, 2, 3 or 4). The assignee of the present invention also markets a "PowerShift" series transmission in which at least one shift lever need not be foot clutched to shift "on-the-fly" during use. Variants of the PowerShift series transmission go back to the 4020 series tractors manufactured in the 1960's by the assignee.

Another type of transmission used in a work machine is an Infinitely Variable Transmission (IVT) which provides continuous variable output speed from 0 to maximum in a stepless fashion. An Infinitely Variable Transmission typically includes hydrostatic and mechanical gearing components. The hydrostatic components convert rotating shaft power to hydraulic flow and vice versa. The power flow through an Infinitely Variable Transmission can be through the hydrostatic components only, through the mechanical components only, or through a combination of both depending on the design and output speed.

One example of an Infinitely Variable Transmission for use in a work machine is a hydromechanical transmission which includes a hydraulic module coupled with a planetary gear set. Another example of an Infinitely Variable Transmission for a work machine is a hydrostatic transmission which includes a hydraulic module coupled with a gear set.

In current applications, a direct-drive PowerShift series transmission, a torque converter driven PowerShift series transmission, or a hydrostatic driven discrete speed range transmission is typically used. Each of these configurations require some shifting to change the speed ratio of the gearbox to achieve the desired range of vehicle speeds (up to 17 mph for skidders, 24 mph for loaders).

What is needed in the art is a transmission which is easier and simpler to operate.

This object is achieved by the present invention, wherein a transmission for a vehicle comprises a first variable speed drive having a first output shaft, and a second variable speed drive having a second output shaft. A planetary gear set includes a sun gear coupled with said first output shaft. A ring gear is coupled with said second output shaft. A plurality of planetary gears is enmeshed between said sun gear and said ring gear. A carrier gear is coupled with each of said plurality of planetary gears. A final output includes a third output shaft carrying an output gear, said output gear is enmeshed with said carrier gear.

For a complete understanding of the objects, techniques, and structure of the invention reference should be made to the following detailed description and accompanying drawings, wherein similar components are designated by identical reference numerals:
- Fig. 1: is a perspective view of a rear end drive train of an agricultural tractor comprising a transmission according to the invention, and
- Fig. 2: is a schematic illustration of an embodiment of the transmission as used in the rear end drive train shown in Fig. 1.

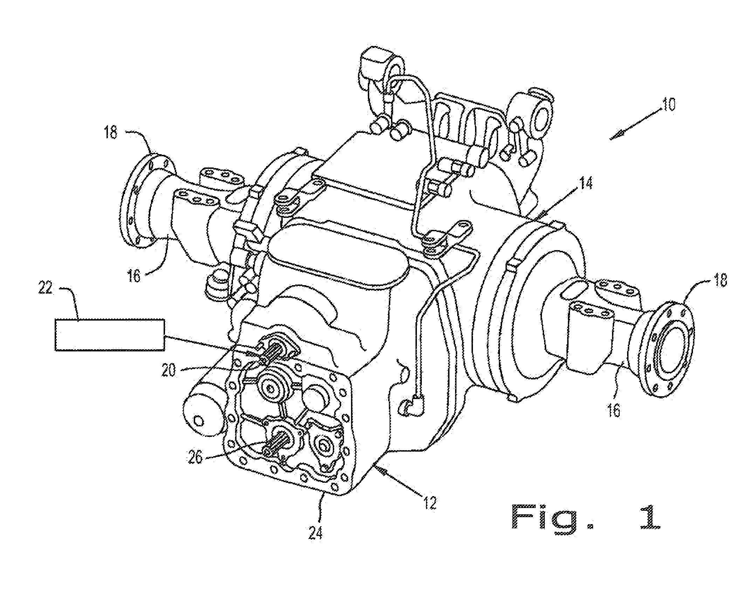

Referring now to the drawings, and more particularly to Fig. 1, there is shown a rear end drive train 10 of an agricultural tractor.

The rear end drive train 10 includes a transmission 12 which is coupled with a rear end differential 14, which in turn drives a pair of rear axles 16. Each rear axle 16 includes an outboard hub 18 to which a respective rear drive wheel (not shown) is mounted. Although rear axles 16 are shown configured for carrying respective drive wheels, it is also possible that rear end differential 14 can be configured for driving a pair of ground engaging tracks.

Transmission 12 includes a driven shaft 20 which is mechanically coupled with and receives rotational input power from internal combustion (IC) engine 22, shown schematically in Fig. 1. Driven shaft 20 extends through and is rotatably carried by housing 24, which likewise houses and rotatably carries a number of other components. For example, housing 24 may carry a clutch arrangement, which selectively interconnects with output shaft 26 so that a mechanical front wheel drive (MFWD) is engaged by actuation of a switch in an operator's station of the agricultural tractor.

Driven shaft 20 also transfers rotational power to other internal transmission components positioned within housing 24. Rotational power is then transferred, according to a selected gear ratio, to rear end differential 14.

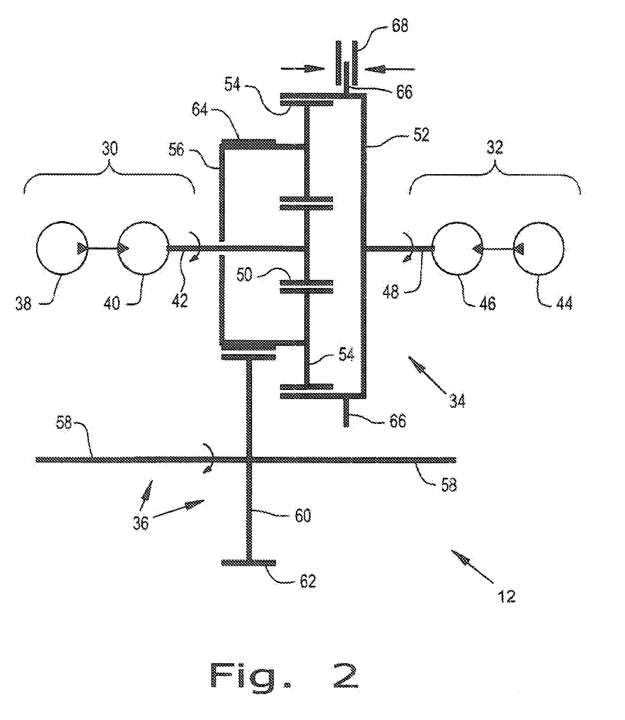

More particularly, and according to an aspect of the present invention, transmission 12 includes a number of internal components which are shown more specifically in Fig. 2. Namely, transmission 12 includes a first variable speed drive 30, a second variable speed drive 32, a planetary gear set 34, and a final output 36. In the illustrated embodiment, first variable speed drive 30 and second variable speed drive 32 are each in the form of an Infinitely Variable Transmission (IVT), and, more particularly, in the form of a first hydrostatic transmission and a second hydrostatic transmission. However, it is to be understood that first variable speed drive 30 and second variable speed drive 32 could be configured as a different type of variable speed drive, depending upon the application. For example, first variable speed drive 30 could be configured as a first electrical motor and second variable speed drive 32 could be configured as a second electrical motor. Alternatively, rather than configuring each variable speed drive as an Infinitely Variable Transmission in the form of a hydrostatic transmission, it is possible to configure each variable speed drive as a different type of Infinitely Variable Transmission, such in the form of a hydromechanical transmission.

First variable speed drive 30 includes a variable displacement pump 38 and a variable displacement motor 40, with variable displacement motor 40 being coupled with and driving a first output shaft 42. Second variable speed drive 32 includes a variable displacement pump 44 and a fixed displacement motor 46, with fixed displacement motor 46 being coupled with and driving a second output shaft 48. In the embodiment shown, flow rate of variable displacement pump 44 of second variable speed drive 32 is smaller than of variable displacement pump 38 of first variable speed drive 30. However, it is to be understood that the relative flow rate sizes between pumps 38 and 44 can vary, depending upon the application. The same may apply to the driving power of motors 40 and 46.

Planetary gear set 34 includes a sun gear 50, a ring gear 52, a plurality of planetary gears 54, and a carrier gear 56. Sun gear 50 is coupled with first output shaft 42 associated with first variable speed drive 30. Ring gear 52 is coupled with second output shaft 48 associated with second variable speed drive 32. The plurality of planetary gears 54 is enmeshed between sun gear 50 and ring gear 52. The number of planetary gears 54 which are actually used between sun gear 50 and ring gear 52 can vary, depending on the application. In the embodiment shown, it is assumed that four planetary gears 54 are enmeshed with sun gear 50 and ring gear 52. Carrier gear 56 is coupled with each of the plurality of planetary gears 54. More particularly, carrier gear 56 is coupled with each planetary gear 54 at the axis of rotation of each planetary gear 54, and thus rotates according to the translational speed of the planetary gears 54 about sun gear 50.

Final output 36 includes a third output shaft 58 which carries an output gear 60. Output gear 60 has a plurality of exterior teeth 62 which can enmesh with corresponding exterior teeth 64 on carrier gear 56. The diameter of output gear 60, and thus the relative gear ratio between carrier gear 56 and output gear 60, can vary, depending on the application. Third output shaft 58 extends axially from opposite ends of output gear 60. One end of third output shaft 58 is configured to drive the mechanical front wheel drive, while the other end of third output shaft 58 is configured to drive rear end differential 14. Thus, the front end of third output shaft 58 either corresponds to or is coupled with output shaft 26 leading to the mechanical front wheel drive. Third output shaft 58 also extends generally parallel to each of first output shaft 42 and second output shaft 48, given the orientation of the various gears shown in Fig. 2.

Transmission 12 also preferably includes an annular disc 66 which extends radially outward from ring gear 52. A brake 68 is configured to selectively engage annular disc 66 and thereby lock rotational movement of ring gear 52 during operation, as will be described in more detail below.

During operation, variable displacement motor 40 drives sun gear 50, and fixed displacement motor 46 drives ring gear 52 in the same rotational direction. There are two modes of operation:
(a) Ring gear 52 is locked with brake 68. This mode achieves the deepest gear reduction and highest tractive effort.
(b) Brake 68 is released and ring gear 52 is driven by fixed displacement motor 46. This mode of operation reduces the speed ratio of transmission 12 and speed of agricultural tractor increases with increased speed of fixed displacement motor 46 in second variable speed drive 32.

The present invention achieves an infinitely variable speed ratio from the deepest ratio of the planetary gear set 34 (around 6:1 with the ring gear 52 stationary) to a 1:1 or even overdrive ratio with the ring gear 52 at its maximum speed. Carrier gear 56 is the output of planetary gear set 34, and drives the single-gear output shaft 58 to drop the output center location and provide both a front and rear output from transmission 12.

## Claims

1. A transmission for a vehicle, comprising a first variable speed drive (30) having a first output shaft (42); a second variable speed drive (32) having a second output shaft (48); a planetary gear set (34) including a sun gear (50) coupled with said first output shaft (42), a ring gear (52) coupled with said second output shaft (48), a plurality of planetary gears (54) enmeshed between said sun gear (50) and said ring gear (52), and a carrier gear (56) coupled with each of said plurality of planetary gears (54); and a final output (36) including a third output shaft (58) carrying an output gear (60), said output gear (60) enmeshed with said carrier gear (56).

2. The transmission according to claim 1, **characterized in that** said first variable speed drive (30) is formed by a first Infinitely Variable Transmission and said second variable speed drive (32) is formed by a second Infinitely Variable Transmission.

3. The transmission according to claim 1 or 2, **characterized in that** said first variable speed drive (30) and said second variable speed drive (32) rotationally drive said sun gear (50) and said ring gear (52) in a same rotational direction, respectively.

4. The transmission according to one of claims 1 to 3, **characterized in that** said first variable speed drive (30) includes a variable displacement pump (38) and a variable displacement motor (40), and said second variable speed drive (32) includes a variable displacement pump (44) and a fixed displacement motor (46).

5. The transmission according to one of claims 1 to 4, **characterized in that** said variable displacement pump (44) in said second variable speed drive (32) has an smaller flow rate than said variable displacement pump (38) in said first variable speed drive (30).

6. The transmission according to one of claims 1 to 5, **characterized by** an annular disc (66) extending radially outward from said ring gear (52), and a brake (68) configured to selectively engage said annular disc (66).

7. The transmission according to one of claims 1 to 6, **characterized in that** said carrier gear (56) and said output gear (60) each include exterior teeth (64, 62) enmeshed with each other.

8. The transmission according to one of claims 1 to 7, **characterized in that** each of said first output shaft (42), said second output shaft (48) and said third output shaft (58) extend generally parallel to each other.

9. The transmission according to one of claims 1 to 8, **characterized in that** said third output shaft (58) extends axially from opposite sides of said output gear (60).

10. The transmission according to one of claims 1 to 9, **characterized in that** one end of said third output shaft (58) is configured to drive a mechanical front wheel drive, while the other end of third output shaft (58) is configured to drive a rear end differential 14.

11. A work machine, in particular an agricultural tractor, comprising an internal combustion engine (22) and a rear end drive train (10) coupled with said internal combustion engine (22), said rear end drive train (10) including a transmission (12) according to one of claims 1 to 10.
